Europäisches Patentamt

European Patent Office

Office européen des brevets

(19)

(11) Veröffentlichungsnummer: **0 473 087 A2**

# (12) EUROPÄISCHE PATENTANMELDUNG

(21) Anmeldenummer: **91114244.6**

(51) Int. Cl.5: **B01J 47/08**

(22) Anmeldetag: **24.08.91**

(30) Priorität: **31.08.90 DE 4027526**

(43) Veröffentlichungstag der Anmeldung:
**04.03.92 Patentblatt 92/10**

(84) Benannte Vertragsstaaten:
**CH DE FR GB LI NL**

(71) Anmelder: **K.D. PHARMA GmbH
Am Kraftwerk 4
W-6652 Bexbach(DE)**

(72) Erfinder: **DORSCHEID, Michael
Blumenstrasse 15,
W-6683 Spiesen-Elversberg(DE)**
Erfinder: **KRUMBHOLZ, Rudolf, Dr.
Am Teschling 24,
W-6689 Merchweiler 2(DE)**
Erfinder: **WEIN, Klaus, D.
Bachtalstrasse 326
W-6635 Schwalbach-Elm(DE)**

(74) Vertreter: **Bernhardt, Winfrid, Dr.-Ing.
Kobenhüttenweg 43
W-6600 Saarbrücken(DE)**

(54) **Verfahren zum Vermindern der Konzentration einer Lösung an einem bestimmten Ion oder einer bestimmten Gruppe von Ionen.**

(57) Um ohne Einsatz von Chemikalien bestimmte Ionen oder Gruppen von Ionen möglichst weitgehend aus Lösungen abzutrennen, wird eine an sich bekannte Vorrichtung angewandt aus mindestens einer mit der Lösung beschickten, mit Ionenaustauscher gefüllten Kammer, die auf gegenüberliegenden Seiten durch eine Anionen- und eine Kationenaustauschermembran von mit Spüllösung durchströmten Kammern getrennt ist, zwischen denen ein elektrisches Potentialgefälle besteht, mit der Maßgabe, daß als der Ionenaustauscher ein für das Ion bzw. die Gruppe von Ionen selektiver Ionenaustauscher angewandt wird.

Damit gelingt zwar keine reine Abtrennung nur dieses bestimmten Ions bzw. der Gruppe, jedenfalls nicht in einem Schritt. Es muß eine, u.U. an sich nicht erforderliche, Verminderung auch der anderen gelösten Stoffe in Kauf genommen werden.

Aus den Mengenverhältnissen ergibt sich aber ein entscheidender Vorteil, der vielfach die Anwendung des Verfahrens lohnen wird.

Das betreffende Ion bzw. die Gruppe wird, wie sich erweist, in einem entschieden höheren Maße durch die Elektrodialyse aus der erstgenannten Kammer herausgezogen als die übrigen Ionen.

EP 0 473 087 A2

Die Erfindung betrifft ein Verfahren zum Vermindern der Konzentration einer Lösung an einem bestimmten Ion oder einer bestimmten Gruppe von Ionen, insbesondere unter einen vorgeschriebenen Grenzwert.

Zur Aufbereitung von Wasser - Trinkwasser oder Prozeßwasser einerseits, Abwasser andererseits - werden in der Hauptsache Verfahren angewandt, die auf Destillation, Ionenaustausch, Umkehrosmose oder Fällungen beruhen. In neuerer Zeit bekannt geworden ist ferner zur Erzeugung von hochreinem Wasser eine kombinierte Anwendung von Ionenaustausch und Elektrodialyse (EU-PS 0 170 895; Zeitschrift "Ultrapure Water", April 1987).

Die Verfahren zielen in der Regel darauf ab, die gelösten Stoffe insgesamt möglichst weitgehend aus dem Wasser zu entfernen.

In den letzten Jahren stieg demgegenüber das Bedürfnis, nur bestimmte Ionen zu entfernen.

Beispiele dafür sind Nitrationen in Trinkwasser, Chromionen in bestimmten Prozeßlösungen der Galvanik und Schwermetallionen, vor allem von Chrom und Blei, in Abwasser.

Hier wendet man selektive Ionenaustauscher an. Diese haben jedoch den entscheidenden Nachteil, regeneriert werden zu müssen unter Verwendung von Chemikalien, die dann die Gewässer belasten.

Der Erfindung liegt die Aufgabe zugrunde, ohne Einsatz von Chemikalien bestimmte Ionen oder Gruppen von Ionen möglichst weitgehend aus Lösungen abzutrennen.

Die Erfindung greift zu diesem Zweck das oben erwähnte, zur Erzeugung hochreinen Wassers bekannte kombinierte Verfahren auf. Sie wendet die von diesem Verfahren bekannte Vorrichtung an aus mindestens einer mit der Lösung beschickten, mit Ionenaustauscher gefüllten Kammer, die auf gegenüberliegenden Seiten durch eine Anionen- und eine Kationenaustauschermembran von mit Spüllösung durchströmten Kammern getrennt ist, zwischen denen ein elektrisches Potentialgefälle besteht, aber mit der Abwandlung, daß als der Ionenaustauscher ein für das Ion bzw. die Gruppe von Ionen selektiver Ionenaustauscher angewandt wird.

Damit gelingt zwar keine reine Abtrennung nur dieses bestimmten Ions bzw. der Gruppe, jedenfalls nicht in einem Schritt. Es muß eine, u.U. an sich nicht erforderliche, Verminderung auch der anderen gelösten Stoffe in Kauf genommen werden.

Aus den Mengenverhältnissen ergibt sich aber ein entscheidender Vorteil, der vielfach die Anwendung des Verfahrens lohnen wird.

Das betreffende Ion bzw. die Gruppe von Ionen wird, wie sich erweist, in einem entschieden höheren Maße durch die Elektrodialyse aus der erstgenannten Kammer herausgezogen als die übrigen Ionen.

Eine Gruppe ggf. abzutrennender Ionen, für die auch gruppenselektive Ionenaustauscher zur Verfügung stehen, sind beispielsweise Schwermetalle.

Weiter kann das Verfahren auf mehrere Ionen oder Gruppen von Ionen jeweils gezielt, aber gleichzeitig angewandt werden mit einer Mischung der für die Ionen bzw. Gruppen von Ionen selektiven Ionenaustauscher. Besonders praktisch ist in dieser Beziehung die gleichzeitige Abtrennung eines Anions und eines Kations, da sie in die beiden verschiedenen mit Spüllösung durchströmten Kammern übertreten.

Das Verfahren läßt sich auch zur Rückgewinnung von Werkstoffen anwenden. Beispielsweise könnte so nach einer elektrolytischen Abscheidung eine Restkonzentration, bei Kupfer z.B. von etwa 20 ppm, weiter ausgewertet werden.

Im folgenden soll die Erfindung anhand von Beispielen weiter veranschaulicht werden:

Beispiel 1

Entfernung von Nitrat aus Trinkwasser

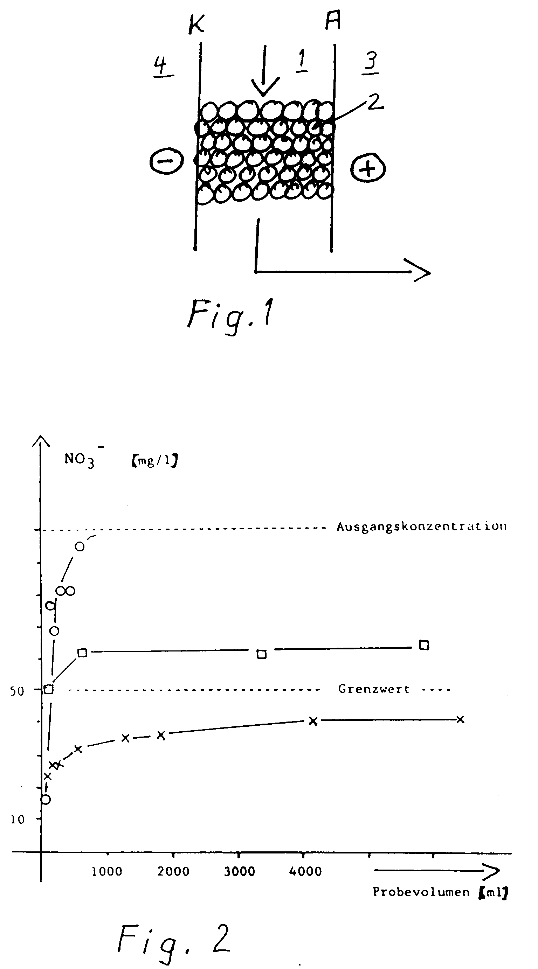

Als Apparatur verwendet wurde eine auf ein 3-Kammer-System reduzierte Elektrodialyse-Laboranlage BEL 2 (Berghof), wie in Fig. 1 schematisch wiedergegeben.

Ihre Diluat-Kammer 1 wurde mit einem nitrat-selektiven Ionenaustauschermaterial 2 gefüllt, und zwar A520E (Purolite).

Die Diluat-Kammer 1 wurde begrenzt durch eine Anionenaustauschermembran A und eine Kationenaustauschermembran K jeweils mit einer effektiven Membranfläche von 37 cm$^2$ und bestehend aus Selemnion AMV bzw. Selemnion CMV (Asahi Glass).

Die jeweils auf der anderen Seite der Anionenaustauschermembran A und der Kationenaustauschermembran K sich anschließende Kammer 3 bzw. 4 wurde jeweils mit 1 Liter Spüllösung aus 0,1 m $Na_2SO_4$ im Kreislauf durchströmt.

Eine Spannung von 5 Volt wurde zwischen der Kammer 3 als Anodenkammer und der Kammer 4 als Kathodenkammer angelegt. Mit der in der Kammer 1 aufgegebenen Lösung ergab sich eine Stromstärke von 0,04 A. Die Raumtemperatur lag zwischen 25 und 30° C.

Aufgegeben wurde ein der kommunalen Wasserleitung entnommenes Trinkwasser, das zusätzlich mit einem Nitrat versetzt worden war, so daß der Nitratgehalt der Aufgabelösung 101 mg/l betrug und die Leitfähigkeit 616 $\mu$S/cm.

Die Durchflußrate betrug bei Anwendung einer Schlauchpumpe 400 ml/h.

Es wurden unmittelbar aufeinanderfolgend acht Proben verschiedener Größen genommen. Die Ergebnisse sind in der nachstehenden Tabelle angeführt.

| Probe Nr. | Konzentration $NO_3^-$ mg/l | Leitfähigkeit $\mu$S/cm | Probevolumen ml |
|---|---|---|---|
| 1 | 23 | 304 | 100 |
| 2 | 27 | 307 | 100 |
| 3 | 27 | 306 | 100 |
| 4 | 32 | 301 | 500 |
| 5 | 35 | 276 | 1000 |
| 6 | 36 | 285 | 50 |
| 7 | 41 | 285 | 4500 |
| 8 | 41 | 292 | 100 |

Die vorstehenden Ergebnisse sind in Fig. 2 in der unteren Kurve graphisch dargestellt.

Wie sich erkennen läßt, wird ausgehend von der ursprünglichen $NO_3^-$-Konzentration von 101 mg/l ein Endwert von 41 mg/l erzielt, also ein sicherer Abstand von dem Grenzwert von 50 mg/l und eine Verminderung um 60%.

Die gleichzeitige Verminderung des Salzgehalts insgesamt läßt sich in der Tabelle aus der Leitfähigkeit ersehen. Sie beträgt gegenüber dem ursprünglichen Wert von 616 $\mu$S/cm gut 50%.

Ausgehend von diesen ersten Versuchsergebnissen darf man erwarten, durch technische Optimierungen auf eine Nitratverminderung von bis zu 70% bei einer Verminderung des gesamten Salzgehalts von bis zu 55% zu kommen.

Zwei Vergleichsversuche wurden im Rahmen des Beispiels 1 durchgeführt mit Elektrodialyse allein und mit Ionenaustausch allein.

Für die Elektrokdialyse allein wurde die gleiche Versuchsanordnung verwendet, nur ohne die Füllung der Kammer 1 mit dem Ionenaustauscher. Die Ausgangslösung hatte eine Nitrat-Konzentration von 103 mg/l und eine Leitfähigkeit von 625 $\mu$S/cm. Bei der angelegten Spannung von 5 Volt ergab sich eine Stromstärke 0,04 A.

Die Ergebnisse sind in der nachstehenden Tabelle angeführt und in Fig. 2 mit der mittleren Kurve veranschaulicht: Sie liegen über dem Grenzwert.

| Probe Nr. | Konzentration $NO_3^-$ mg/l | Leitfähigkeit $\mu$S/cm | Probevolumen ml |
|---|---|---|---|
| 1 | 49 | 373 | 150 |
| 2 | 51 | 380 | 75 |
| 3 | 63 | 387 | 750 |
| 4 | 62 | 394 | 4800 |
| 5 | 65 | 396 | 200 |

Für den Ionenaustausch allein wurde ebenfalls die gleiche Versuchsanordnung verwendet, hier jedoch ohne eine Spannung anzulegen. Die Ausgangskonzentration an Nitrat betrug 98 mg/l, die Leitfähigkeit 649 $\mu$S/cm.

Die Ergebnisse sind in der nachfolgenden Tabelle angeführt und in Fig. 2 in der oberen Kurve dargestellt.

| Probe Nr. | Konzentration $NO_3^-$ mg/l | Leitfähigkeit $\mu$S/cm | Probevolumen ml |
|---|---|---|---|
| 1 | 16 | 674 | 100 |
| 2 | 76 | 648 | 50 |
| 3 | 68 | 660 | 100 |
| 4 | 82 | 650 | 100 |
| 5 | 82 | 630 | 200 |
| 6 | 95 | 631 | 100 |

Ein Vergleich der drei Tabellen und drei Kurven erschließt folgende Zusammenhänge:

Die obere Kurve, deren Meßpunkte als Kreise gezeichnet sind, zeigt einen ersten Meßpunkt bei etwa 16 mg/l. Sie steigt steil an und nähert sich bald der Ausgangskonzentration. Der Ionenaustauscher nimmt anfänglich sehr viel auf und ist dann bald erschöpft.

Auch die als Quadrate dargestellten Werte der reinen Elektrodialyse liegen nach der Einstellung des Gleichgewichts über dem Grenzwert.

Die mit Kreuzen als Meßpunkten gezeichnete Kurve des vorgeschlagenen Verfahrens dürfte am Anfang durch die Aufnahmekapazität des Ionenaustauschers mitbestimmt sein und bleibt dann in einer eigenen, konstanten Höhe.

Beispiel 2

Entfernung von Chromionen aus Wasser

Es wurde die gleiche Apparatur unter den gleichen Versuchsbedingungen wie in Beispiel 1 verwendet mit folgenden Abwandlungen:

Die Diluat-Kammer 1 wurde mit einem schwermetall-selektiven Austauschermaterial gefüllt, Amberlite IRC 718 (Röhm & Haas). Die Spüllösung bestand aus 0,1 m Natriumsulfat, mit Schwefelsäure auf pH 2 eingestellt.

Statt mit 5 Volt wurde mit 20 Volt und mit 10 Volt gearbeitet.

Aufgegeben wurde eine Lösung mit einer Konzentration von 1,6 ppm Chromionen und einer Konzentration von 500 ppm Natriumionen, Leitfähigkeit 990 $\mu$S/cm.

Die nachstehende Tabelle enthält die Ergebnisse.

| Probe Nr. | Spannung V | Probevolumen ml | Stromstärke A | Konzentration $Cr^{3+}$ ppm | Leitfähigkeit S/cm |
|---|---|---|---|---|---|
| 1 | 20 | 150 | 0,45 | 0,33 | 290 |
| 2 | 15 | 100 | 0,34 | 0,51 | 390 |
| 3* | 15 | 100 | 0,34 | 0,57 | 462 |

*Durchflußgeschwindigkeit 800 ml/h.

Der vorgeschriebene Grenzwert von 0,5 ppm kann also unter Anwendung von 20 V Spannung sicher unterschritten werden. Die Entchromung ist weitaus stärker als die Gesamtentsalzung.

Vergleichsversuch mit Elektrodialyse allein entsprechend Beispiel 1:

Ausgangslösung 1,60 ppm $Cr^{3+}$, Leitfähigkeit 993 $\mu$S/cm.

| Probe Nr. | Spannung V | Probevolumen ml | Stromstärke A | Konzentration $Cr^{3+}$ ppm | Leitfähigkeit $\mu$S/cm |
|---|---|---|---|---|---|
| 1 | 15 | 250 | 0,29 | 0,73 | 221 |
| 2 | 15 | 250 | 0,29 | 0,67 | 245 |
| 3 | 15 | 250 | 0,29 | 0,76 | 271 |

Vergleichsversuch mit Ionenaustausch allein:

Ausgangslösung 1,60 ppm $Cr^{3+}$, Leitfähigkeit 1063 $\mu$S/cm.

| Probe Nr. | Probevolumen ml | Konzentration $Cr^{3+}$ ppm | Leitfähigkeit $\mu$S/cm |
|---|---|---|---|
| 1 | 300 | 1,3 | 1070 |
| 2 | 150 | 1,2 | 1060 |

Beispiel 3

Entfernung von Bleiionen aus Wasser

Es wurde die gleiche Apparatur unter den gleichen Versuchsbedingungen wie in Beispiel 1 verwendet mit folgenden Abwandlungen:

Die Diluat-Kammer 1 wurde mit einem schwermetall-selektiven Austauschermaterial gefüllt, Amberlite IRC 718 (Röhm & Haas). Die Spüllösung bestand aus 0,1 m Amidosulfonsäure.

Außer mit 5 Volt wurde mit 10 Volt und mit 15 Volt gearbeitet.

Aufgegeben wurde eine Lösung von Pb $(NO_3)_2$ und NaCl mit einer Konzentration von 50 ppm $Pb^{3+}$ und einer Konzentration von 50 ppm $Na^+$, Leitfähigkeit 315 $\mu$S/cm (eine typische Abwasserverunreinigung).

Die nachstehende Tabelle enthält die Ergebnisse.

| Probe Nr. | Spannung V | Konzentration $Pb^{2+}$ ppm | Leitfähigkeit $\mu$S/cm |
|---|---|---|---|
| 1 | 10 | <0,1 | 94 |
| 2 | 10 | <0,1 | 48 |
| 3 | 10 | <0,1 | 26 |
| 4 | 15 | <0,1 | 10 |
| 5 | 15 | <0,1 | 12 |
| 6 | 15 | <0,1 | 15 |
| 7 | 15 | <0,1 | 10 |
| 8 | 5 | 0,5 | 26 |
| 9 | 5 | 0,4 | 29 |

Der vorgeschriebene Grenzwert von 0,5 ppm wurde bei allen Spannungen erreicht bzw. weit unterschritten. Bei den technisch in Betracht kommenden Spannungen von 5 bis 10 V vermindert sich der Gesamtsalgehalt auf knapp 1/10, der Bleiionengehalt auf 1/100 bzw. 1/1000.

**Patentansprüche**

1. Verfahren zum Vermindern der Konzentration einer Lösung an einem bestimmten Ion oder einer bestimmten Gruppe von Ionen, insbesondere unter einen vorgeschriebenen Grenzwert,
gekennzeichnet durch die Anwendung einer an sich bekannten Entionisationsvorrichtung aus mindestens einer mit der Lösung beschickten, mit Ionenaustauscher (2) gefüllten Kammer (1), die auf gegenüberliegenden Seiten durch eine Anionen- und Kationenaustauschermembran (A bzw. K) von mit Spüllösung durchströmten Kammern (3;4) getrennt ist, zwischen denen ein elektrisches Potentialgefälle besteht,
mit der Maßgabe, daß als der Ionenaustauscher ein für das Ion bzw. die Gruppe von Ionen selektiver Ionenaustauscher angewandt wird.

2. Verfahren nach Anspruch 1,
dadurch gekennzeichnet,
daß zur Verminderung der Nitrat-Konzentration A520E (Purolite) angewandt wird.

3. Verfahren nach Anspruch 1,
dadurch gekennzeichnet,
daß zur Verminderung der Konzentration an Bleiionen oder Chromionen TP 207 (Bayer) oder Amberlite IRC 718 (Röhm & Haas) angewandt wird.

5

Fig.1

Fig. 2